# EUROPEAN PATENT SPECIFICATION

(11) **EP 0 632 271 B1**
(45) Date of publication and mention of the grant of the patent: **28.04.1999**
(21) Application number: 94304842.1
(22) Date of filing: 01.07.1994
(51) Int. Cl.: G01N 35/04, G01N 35/02

(54) **Improved transfer mechanism for automatic loading and unloading of reagent modules**
Überführungsvorrichtung zur automatischen Be- und Entladung von Reagenzmodulen
Dispositif de transfert pour le chargement et déchargement automatique de modules de réactifs

(30) Priority: 01.07.1993 US 86408; 27.06.1994 US 267086
(43) Date of publication of application: 04.01.1995
(73) Proprietor: Johnson & Johnson Clinical Diagnostics, Inc., Rochester New York 14650 (US)
(72) Inventor: Tomasso, David Angelo, c/o Eastman Kodak Company, Rochester, New York 14650-2201 (US); Porte, Johannes Jacobus, c/o Eastman Kodak Company, Rochester, New York 14650-2201 (US)
(74) Representative: Mercer, Christopher Paul

(56) References cited:
- EP-A- 0 223 002
- WO-A-94/01780
- FR-A- 2 323 184
- US-A- 3 348 418
- US-A- 5 075 082
- US-A- 5 219 526

## Description

This invention relates to an improved transfer mechanism and a method for automatically loading and unloading reagent modules from a load station into and off of a rotor, such as is used in a wet assay chemical analyzer.

It is known in wet assay analyzers to provide cartridges of reagents to a rotor, by inserting them along a radius of the rotor where they are processed with the other cartridges likewise inserted. Examples, are shown in, e.g., US-A-5 075 082 and US-A-5 219 526. However, previous constructions have either required the insertion into the rotor to be manual, as described in US-A-5 075 082, or to be done by using a pusher which has to be withdrawn afterwards before the rotor can rotate, the pusher being effective only to load a cartridge, and not to unload it, as shown in US-A-5 219 526.

Therefore, prior to this invention there has been a need for automated means for insertion of reagent cartridges into a rotor which is versatile enough to both a) remain inside the rotor enclosure during rotor rotation and b) act to withdraw a spent cartridge as well as insert a new one.

An analyzer transfer mechanism for reagent cartridges has been devised which solves the above-noted problems.

More specifically, in accordance with one aspect of the present invention, there is provided an analyzer comprising a source of reagents and reaction cuvettes, the analyzer including a rotor having an enclosure and an axis of rotation, a drive for rotating the rotor about the axis, the source comprising a removable module containing a reagent container and a stack of cuvettes, the rotor including receiving stations constructed to receive and engage the modules, a load and unload station for receiving and returning individual modules from and to an operator, and transfer means for transferring an individual module on the load station in a first direction on to the rotor, characterized in that the transfer means and the modules comprise between them, a member with a projecting tongue on one of the transfer means and the modules, and a co-operatively shaped groove on the other of the transfer means and the modules for reception of the tongue within it, the groove being dimensioned to freely slideably accommodate the tongue within it, said tongue and groove having an extension in a direction that is misaligned with the first direction, so that the tongue and groove are effective to move an engaged module on to or off of the rotor along the first direction.

In accordance with another aspect of the present invention, there is provided a method of moving a reagent module into and out of a rotor having an enclosure and a drive axis in an analyzer using a transfer member with a projecting tongue and modules with a mating groove, the method comprising:
a) loading a first module on to a load platform outside of the rotor so that the groove is fitted over the tongue,
b) pushing the tongue against the groove in a direction that enters the enclosure with the module passing on to the rotor,
c) rotating the rotor and the module while the tongue is inside the enclosure so that the tongue slides out of the groove and into a corresponding groove of another module on the rotor that is substantially identical to the first module, and
d) when a module is ready to be withdrawn, pulling the ready module off of the rotor by pulling a tongue of a transfer member against the groove of the module in a direction out of the enclosure.

Thus it is an advantageous feature of the present invention that reagent cartridges or modules (hereinafter, "modules") are loaded and unloaded from the rotor automatically by a transfer mechanism which can remain inside the rotor enclosure while the rotor is rotating to index or move along the modules.

It is a related advantageous feature of the invention that a single transfer mechanism can be used to accomplish both the loading and unloading of said modules.

For a better understanding of the present invention, reference will now be made, by way of example only, to the accompanying drawings, in which:-
Figure 1 is a fragmentary plan view of an analyzer in which the rotor and module transfer means of the invention is useful;
Figure 2 is a partially schematic, isometric view of two rotors of an incubator of the analyzer, showing the various stations;
Figure 3 is a fragmentary elevational view in section of the reagent module and transfer mechanism for the module, shown inside the enclosure of the rotor of modules;
Figure 4 is a bottom view of the undersurface of a module, taken generally along the line IV-IV of Figure 3;
Figure 5 is a fragmentary, exploded isometric view of a module's engagement with the transfer mechanism outside the enclosure of the rotor;
Figure 6 is a fragmentary sectioned elevational view taken generally along the line VI-VI of Figure 5 with the module in place;
Figure 7 is a sectioned view taken generally along the line VII-VII of Figure 6; and
Figure 8 is a sectioned elevational view similar to that shown in Figure 3, except that it illustrates an alternative embodiment of the invention.

The following description is presented in the context of the preferred embodiments, in which a reagent module is loaded and unloaded into and out of a rotor therefor along a radius of the rotor, using a particular shape and contents for the module, for use in a preferred wet assay analyzer. In addition, it is useful regardless of the direction of loading and unloading of the modules, the shape and contents of the modules, or the rest of the analyzer's construction, provided that the module provides the interaction with the transfer mechanism which is the primary feature of the invention.

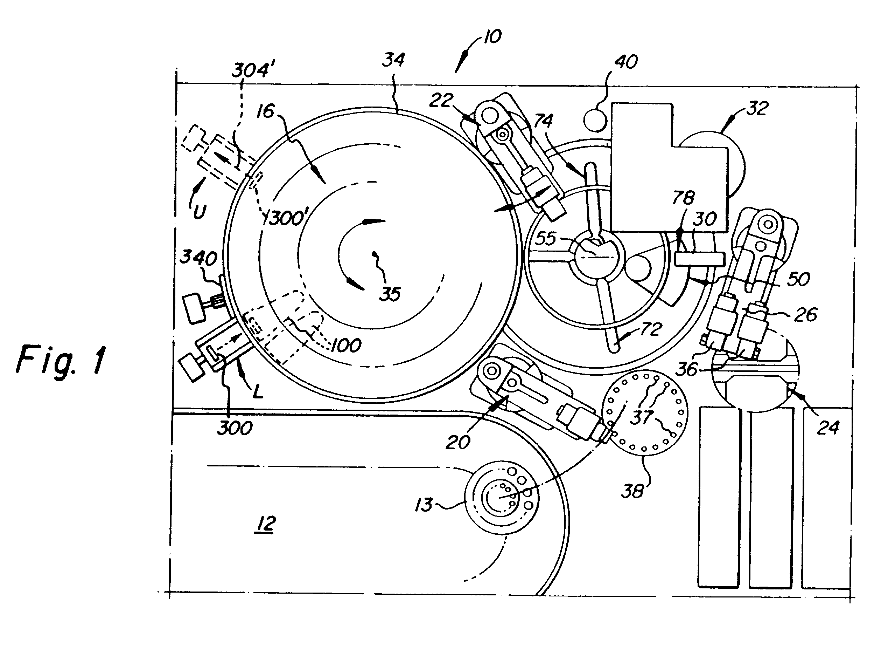

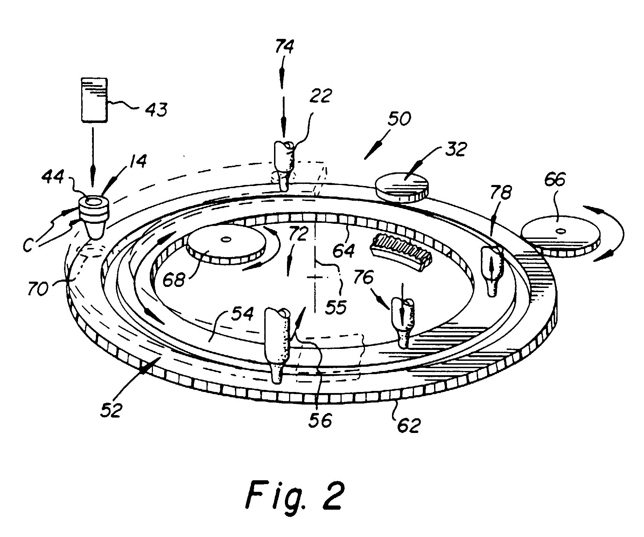

As shown in Figure 1, an analyzer 10 in which the reagent modules and their rotor are used, preferably comprises sample supply station 12, a cuvette supply station 14, Figure 2, a reagent supply station 16, Figure 1, incubator 50, means 20 and 22 for transferring sample and reagent to a cuvette disposed in an outer ring of incubator 50, signal reagent supply station 24, means 26 for transferring signal reagent to the cuvette in an inner ring of incubator 50, cuvette wash station 30, and luminometer 32, all as described in US-A-5 244 633. Any suitable construction can be used for the sample supply station 12, cuvette supply station 14 (Figure 2), reagent supply station 16, transfer means 20, 22 and 26, signal reagent supply station 24, wash dispenser 30, and luminometer 32. Useful sample transfer devices 13 include those described in commonly owned published European application EP-A-0 565 166 corresponding to USSN 859780 filed on March 30, 1992 entitled "Tray and Magnetic Conveyor". Supply station 16 includes a rotor 34 having an axis of rotation 35. Transfer means 20, 22 and 26 are all preferably pivoting aspirators, the aspirator at transfer means 26 having dual probes 36. Transfer means 20 preferably uses disposable tips, which can be presented for pick-up on supply station 12. Additional tips 37 can be presented on turntable 38 for use by means 20 during a dilution step. On the other hand, the aspirator for transfer means 22 preferably uses a more permanent dispensing tip, which uses a wash station 40 as is conventional.

Cuvettes are provided for dispensing at station 14 by mounting them, preferably, in the reagent module 100 discussed below, shown in phantom Figure 1.

Although any cuvette can be used, preferably it is a cup-like container "C", having on its inside wall surface 44 an antibody pre-attached to the wall surface, Figure 2. The antibody is useful in a conventional sandwich assay which produces a complex of antibody-antigen labeled antibody for generating a chemiluminescent signal.

The incubator is preferably that disclosed in US-A-5 244 633, and comprises two rotors which are preferably two concentrically mounted support rings 52, 54 provided with holding apertures (not shown) for receiving and carrying cuvettes C (delivered preferably first to ring 52 by any pusher means 43, Figure 2), rotating means for independently rotating rings 52 and 54 about a common axis 55, transfer means (not shown) for moving a cuvette C, in the direction of arrow 56 (Figure 2), from ring 52 to ring 54, and then off ring 54, processing stations around the rings, and heating means to incubate the contents of the cuvettes on rings 52 and 54. Rings 52 and 54 are shown only schematically in Figure 2 in association with the related components. Rotating means for the rings preferably comprise gear teeth 62, 64 disposed on each of rings 52 and 54, respectively, to be driven by pinion gears 66 and 68.

As noted above, various processing stations are disposed around the circumference of rings 52 and 54, in addition to an entrance port 70 for cuvettes C. They are as follows, Figures 1 and 2: Station 72 is permanently disposed above ring 52 and is the place to which the dispensing tip 37 of aspirator 20, Figure 1, pivots and descends to dispense sample into a cuvette in ring 52, Figure 2. First reagent addition station 74 is permanently disposed at least above ring 52 so that the permanent tip of aspirator 22 can dispense at least a first reagent into a cuvette in ring 52. Optionally, aspirator 22 can also be used to dispense a second reagent, namely a conjugate reagent, as well. A further reagent addition station 76, here for signal reagent, is disposed permanently above at least inner ring 54, to descend to dispense signal reagent into a cuvette in ring 54. Wash dispensing station 78 is disposed permanently above ring 54 for washing cuvettes using wash dispenser 30. Luminometer 32 is permanently disposed above ring 54 for reading chemiluminescence.

Final removal of the used, finished cuvette from ring 54 can be achieved by any suitable mechanism (not shown).

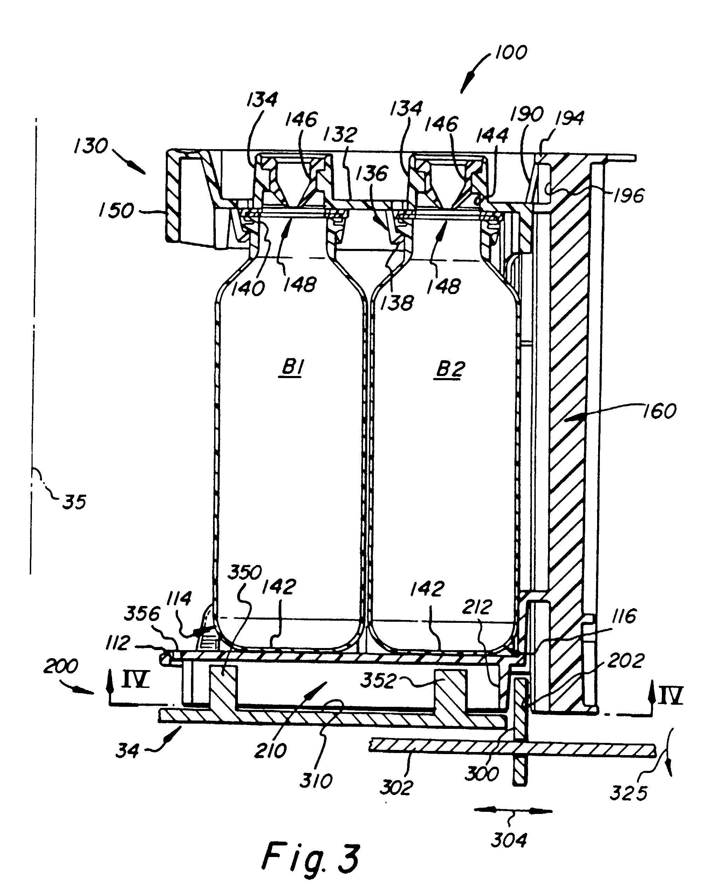

The reagent module 100, Figure 3, is preferably of the type described in European patent application no. filed concurrently herewith and corresponding to USSN 086408 filed in July 1, 1993 entitled "Locked Bottle Holder".

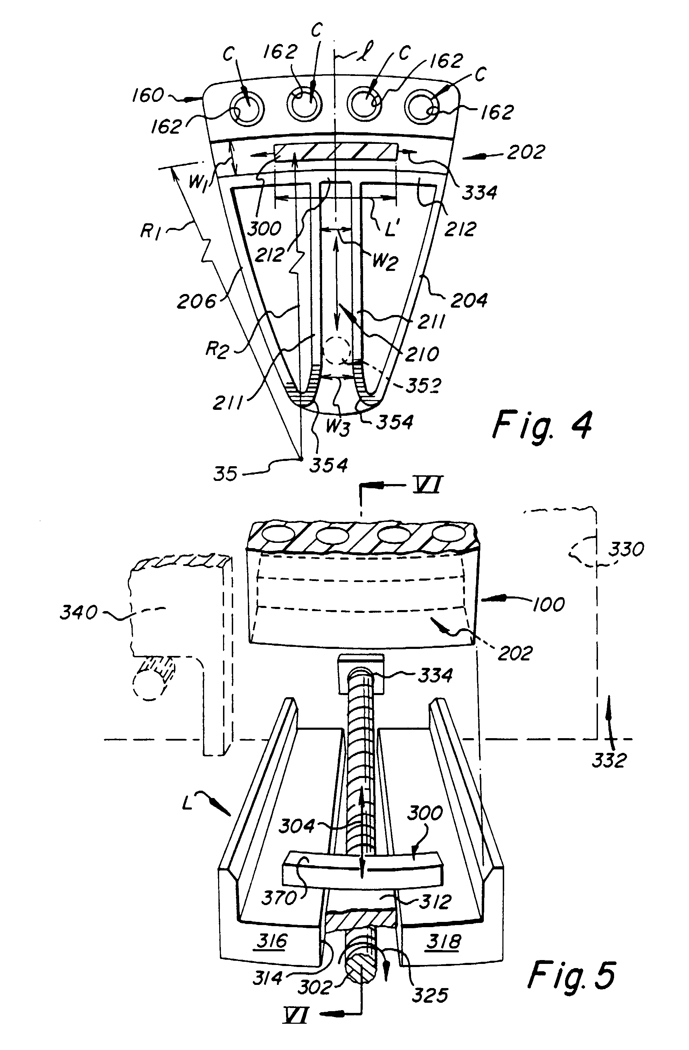

More specifically, module 100 is generally pie-shaped, Figure 4, so as to slide in and out of rotor 34 generally in a circular arrangement of such holders, Figure 1. Such a module 100 comprises a base 112, Figure 3, a top member 130, and a sidewall 160 extending between and joined to the base and top member.

Base 112 comprises in turn a platform having at least one recess and preferably recesses 114 and 116, for each of two bottles B1 and B2 held by the module. As is apparent, recesses 114 and 116 are disposed along an axis "l" of module 100, Figure 4, which is the dimension which aligns with a radius of rotor 34, Figure 1. Base 112, Figure 3, is joined to sidewall 160 by any conventional means, e.g., by welding, by adhesive, by mechanical latches, etc.

Top member 130 comprises a generally flat plate 132 provided with raised bosses 134, and depending fingers 136 with snap latches 138 for locking under the rim of the access end 140 of a bottle B1 or B2. (Opposite ends 142 of the bottles are retained in recesses 114 and 116). Apertures 144 in bosses 134 are shaped to receive stoppers 146, such as duck-billed stoppers. A foil seal 148 is applied directly to the end 140 of the bottle, before it is inserted into latches 138. A side skirt 150 wraps around plate 132 and terminates in a portion, not shown, that extends down along and in contact with sidewall 160.

Sidewall 160 can have any desired shape and thickness, but preferably it has a plurality of, e.g., four cylindrical apertures 162, Figure 4, extending the full height of the wall. A stack of reaction cuvettes, preferably shaped as cups or wells C, Figure 2, is mounted within each aperture. The position of module 100 in place on rotor 34, Figure 1, is such that the stacks of cuvettes are located over ring 52, for ready dispensing by mechanism 43, Figure 2, at station 14.

Preferably, top member 130 interlocks with side wall 160 by reason of a tooth 190 snapping under a ledge 194 defining a groove 196. This prevents, once assembled, bottles B1 and B2 from being accidentally interchanged.

In accordance with one aspect of the invention, module 100 is provided with a surface, preferably an undersurface 200, Figure 3, in which an arcuate groove 202 is formed, Figure 4, of a length extending across the full width from side 204 to side 206. The arc of the groove has a predetermined radius R₁ and a width W₁. Preferably, a second, linear groove 210 is also formed within opposed sidewall 211 in surface 200, aligned with center axis "l", which in turn aligns with a radius of the rotor when the module is inserted on to the rotor. Hence groove 210 is generally perpendicular to groove 202. Most preferably, groove 210 does not connect with groove 202 because of barrier wall 212 which extends across groove 210 to separate it from groove 202, Figure 3. However, the portion 212' of wall 212, Figure 4, which actually closes off groove 210 could be eliminated, so long as tongue 300, described hereinafter, has a length L', as shown, which exceeds width W₂ groove 210.

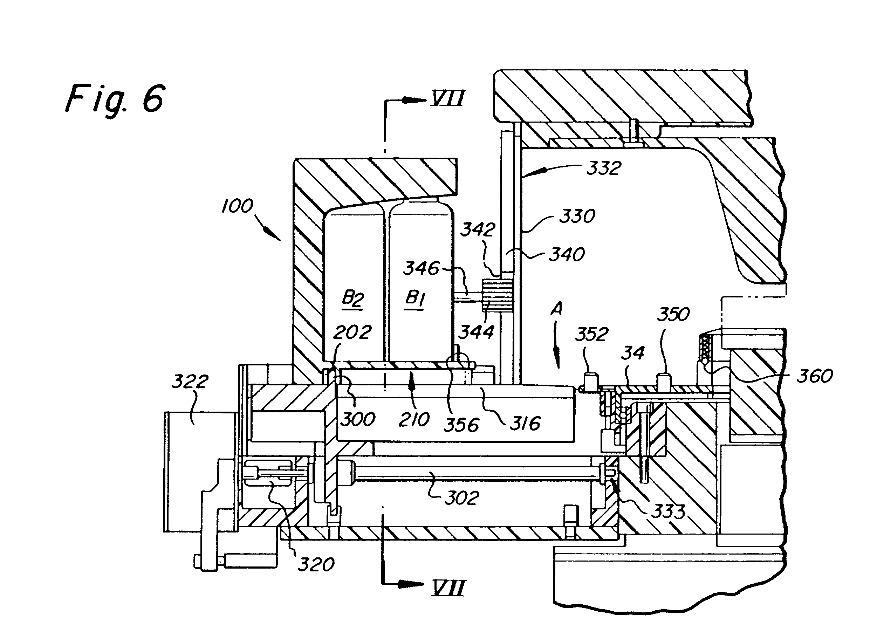

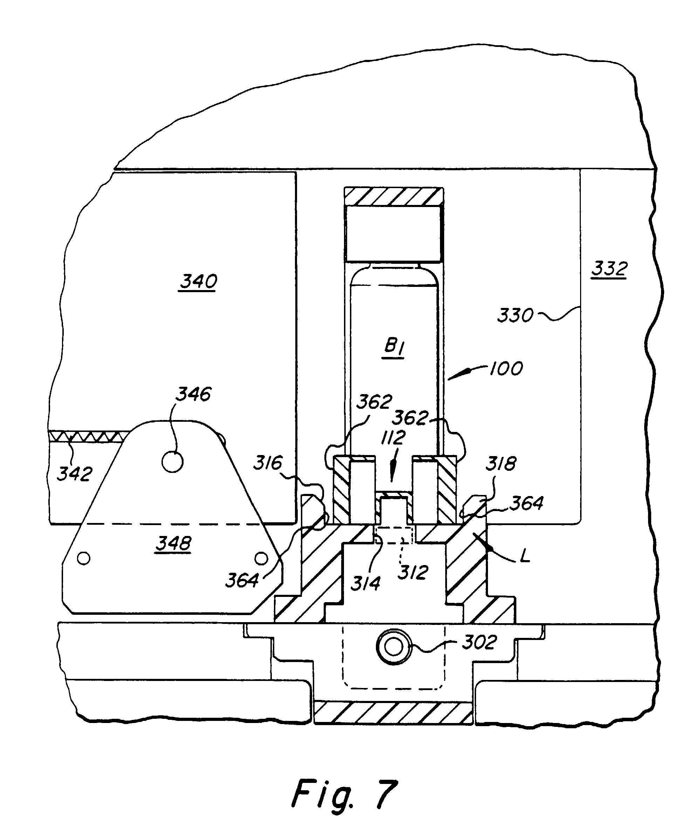

To transfer module 100 into and out of the rotor, a transfer member is provided, which is preferably a tongue 300, Figure 3, threadably mounted on a worm gear 302 so as to linearly advance or retreat therealong, arrow 304, pushing and pulling, respectively, groove 202 and hence module 100 on to and off of surface 310 of rotor 34. Tongue 300 is arcuate with a radius of curvature R₂ which is substantially equal to radius R₁ of groove 202, Figure 4. Tongue 300 extends upwardly from a horizontal plate 312, Figures 5 and 6, which slides within a groove 314 provided by two fixed opposed rails 316, 318 at the module load station L, on which module 100 slideably rests, Figure 7. (The position of plate 312 when advanced is shown in phantom in Figure 7). Gear 302 is driven (rotated, arrow 325, Figure 5) via a coupling 320 by any suitable motor 322, such as a stepper motor, Figure 6. Rails 316 and 318 extend through a doorway 330 in wall 332, Figures 6 and 7, into a position A inside the enclosure of the rotor defined by the wall 332, and adjacent to rotor 34, Figure 6. Gear 302 is journaled at bushing 333 located even further inside rotor wall 332, under rotor 34.

Doorway 330 is preferably opened and closed by a sliding door 340, Figure 6, driven by a rack 342 on the door and a pinion 344 rotated on a shaft 346, as driven by a motor 348, Figure 7.

To cooperate with and align module groove 210 with a radius of rotor 34, surface 310 of rotor 34, Figure 3, preferably includes guides 350, 352 projecting upwardly, of a width dimension W₃, Figure 4, which readily slides within groove 210 as module 100 is moved on to rotor 34. Because guides 350, 352 do the aligning, it is not necessary that the outer walls 362 of module 100, Figure 7, fit snug against inside surfaces 364 of rails 316, 318. Walls 211 are preferably beveled outwardly at 354 to act to center guides 350, 352 within groove 210.

To temporarily lock a module 100 in place within enclosure wall 332 and on rotor 34, a releasable spring-biased ball detent 360 is provided at a location further within enclosure 332 than is guide 350, Figure 6, to engage a mating opening 356 in base 112 of module 100. The spring of the detent has a spring constant which will allow the spring to collapse when a module starts to retreat off the rotor under the action of tongue 300, thus releasing the module.

The operation of the invention will be readily apparent from the preceding. Specifically, a module 100 is manually placed on the loading and unloading station L, Figure 5, formed by rails 316, 318 and plate 312, so that tongue 300 is inserted into groove 202. At this juncture, the station L either automatically senses the presence of module 100, such as by the triggering of a limit switch on tongue 100, or the operator presses a "start" button.

In either case, the actual loading into the rotor waits until an empty receiving station on rotor 34 is available, aligned with load station L. Thus, the invention does not require attendance by the operator. When an empty station is positioned opposite station L. Door 340 is opened, and gear 302 rotates automatically so as to push tongue 300, groove 202 and module 100 into and through doorway 330, with module 100 continuing on in a direction, arrow 304, Figure 5, which aligns guides 350 and 352 with groove 210, Figure 6. Continued advance then mounts module 100 on to rotor 34, Figure 3, with ball detent 360, Figure 6, snapping into hole 356. When in this position, Figure 3, tongue 202 can remain inside wall 332 of the rotor, because as the rotor rotates, arrow 334, Figure 4, (with doorway 330 closed by door 340), grooves 202 of any modules mounted on rotor 34 easily slide over stationary tongue 300 since tongue 300 and grooves 202 have substantially the same arcuate radius of curvature. While inside enclosure wall 332 of the rotor, the contents of bottles B₁ or B₂ can be accessed through seals 148, and cuvettes C of the module can be dispensed. When any of the modules is spent and ready to be withdrawn, door 340 is opened, and tongue 300 pulls groove 202, in the direction of arrow 304, and hence module 100 out of the rotor and back into loading station L, Figure 5, for manual unloading.

Optionally, not shown, a blinking light can be mounted on top surface 370 of tongue 300, Figure 5, to inform the operator when in fact it is outside enclosure wall 332 and hence ready for a new module to be loaded on to it.

In this fashion, the same transfer mechanism of station L can be used to unload a module as is used to load a module.

Alternatively, Figure 1, a separate unloading station U can be located spaced away from station L around the rotor periphery, for use with a separate tongue 300' whose function it is solely to unload, arrow 304' spent modules used and loaded from station L using tongue 300. In such a case, station U is preferably constructed identically to station L, including a door for the rotor doorway, not shown.

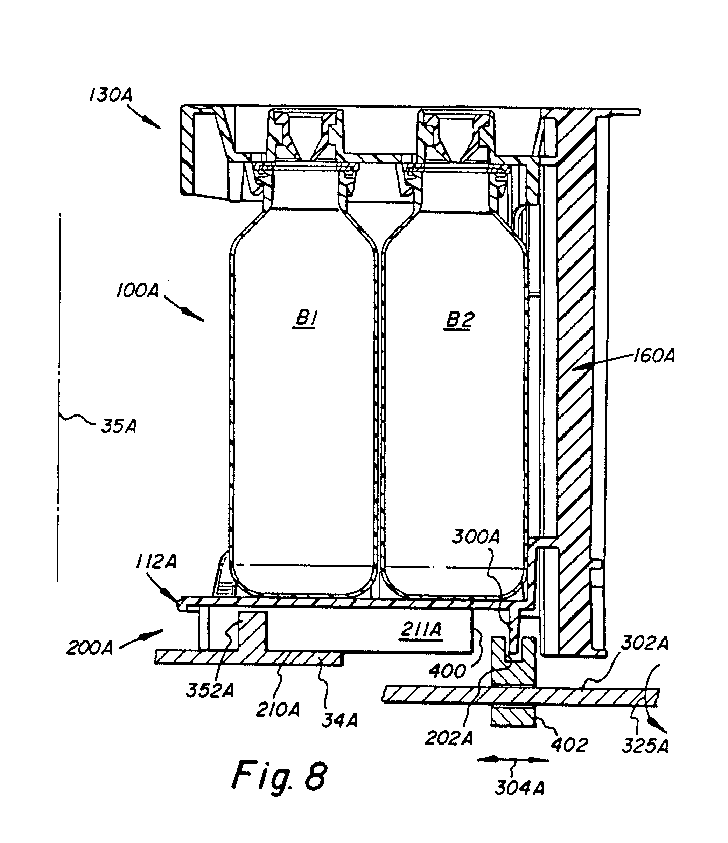

It will be readily apparent that it is not essential that the tongue be part of transfer mechanism and the groove part of the module. Rather, they can be reversed, as shown in Figure 8. Parts similar to those previously described bear the same reference numerals, to which the distinguishing suffix "A" has been appended. Thus, as before, module 100A is pushed and pulled on to rotor 34A having an axis of rotation 35A via the cooperative aligning effect of guides such as 352A and linear groove 210A, the module mounting two bottles B1, B2, and reaction cuvettes (not shown) between the base 112A, top member 130A and sidewall 160A. The rest of the construction of module 100A is as described for the previous embodiment, except that on undersurface 200A, a tongue 300A is formed out of the wall closing off groove 210A, by notching out sidewalls 211A at portion 400. This in turn cooperates with a groove 202A formed in the transfer member 402 threaded on to worm gear 302A as before. As gear 302A rotates, in the direction of arrow 325A, groove 202A pushes or pulls tongue 300A, arrow 304A, and hence module 100A into or out of the rotor. When fully inside the rotor, modules 100A can be rotated with member 402 retained inside, due to the free sliding of tongue 300A within groove 202A.

## Claims

1. An analyzer (10) comprising a source of reagents and reaction cuvettes (C), said analyzer (10) including a rotor (34) having a periphery and an axis (35) of rotation, a drive for rotating said rotor (34) about said axis (35), said source comprising a removable module (100) containing a reagent container (B1, B2) and a stack of said cuvettes (C) , receiving stations on said rotor (34) constructed to receive and engage said modules (100), a load and unload station (L) for receiving and returning individual modules (100) from and to an operator, and transfer means for transferring an individual module on said station (L) in a first direction on to said rotor (34);
characterized in that each of said modules (100) includes a surface, a linear groove (210) part-way along the surface of said modules (100), and an arcuate groove (202) in said surface to which said linear groove (210) extends generally perpendicularly,
so that said linear groove (210) can cooperate with guides (350, 352) projecting from said receiving stations to direct the insertion of said module (100) onto a receiving station along a prescribed path, and said arcuate groove (202) can cooperate with an engaged tongue (300) of said transfer means as a module (100) is forced to rotate by one of said stations over said tongue (300).

2. An analyzer (10) according to claim 1, wherein said arcuate groove (202) and said linear groove (210) are separated from each other by a wall (212).

3. An analyzer (10) according to claim 1 or 2, further including releasable biasing means for releasably engaging said modules (100) when they are fully inserted into said rotor (34), said biasing means including a spring (360) having a constant effective to hold a module (100) in position except when said transfer means withdraws a module from said rotor (34).

4. An analyzer (10) according to any one of claims 1 to 3, wherein said transfer means comprises a tongue (300) and further including a drive constructed to reciprocate said tongue (300) in said first direction, and guides (350, 352) projecting upwardly from each of said receiving stations to receive a module (100) along a path extending generally on a radius of said rotor (34).

5. An analyzer (10) for processing modules of reaction cuvettes, said analyzer (10) including at least one of said modules (100), a rotor (34) for holding said modules (100) at stations so that said modules (100) are generally aligned with a rotor radius, a drive for said rotor (34), transfer means for pushing one of the modules (100) on to one of said stations on said rotor (34), and a drive for reciprocating said transfer means towards and away from said rotor (34) along a linear path;
characterized in that one of said modules (100) and said transfer means include a projecting tongue (300) and the other of said modules (100) and said transfer means includes an arcuate groove (202), said groove (202) and said tongue (300) being co-operatively shaped such that when relative pushing or pulling movement is provided between said tongue (300) and said groove (202), one against the other, the module (100) is pushed or pulled, respectively, relative to said rotor (34), and when said tongue (300) is freely slid within said rotor (34), all of said modules (100) can be rotated without withdrawing said tongue (300) or groove (202) from the vicinity of said rotor (34);
further including releasable biasing means for releasably engaging said modules (100) when they are fully inserted into said rotor (34), said biasing means including a spring (360) having a constant effective to hold a module (100) in position except when said transfer means withdraws a module from said rotor (34).

## Patentansprüche

1. Analysegerät (10) mit einer Zufuhrreinrichtung für Reagenzien und Reaktionsküvetten (C), wobei das Analysegerät einen Rotor (34) mit einem Außenrand und einer Drehachse (35) sowie einen Antrieb zum Drehen des Rotors (34) um die Achse (35) aufweist, die Zufuhreinrichtung einen entnehmbaren Modul (100) umfaßt, welcher einen Reagenzienbehälter (B1, B2) sowie einen Stapel der Küvetten (C) enthält, die Aufnahmestationen auf dem Rotor (34) derart aufgebaut sind, daß sie die Module (100) aufnehmen und ergreifen, eine Lade- und Entladestation (L) zur Aufnahme und Rückgabe einzelner Module von einem bzw. an einen Bediener sowie eine Überführungseinrichtung zur Überführung einzelner Module an der Station (L) in einer ersten Richtung auf den Rotor (34) vorgesehen sind,
dadurch gekennzeichnet, daß jeder der Module (100) eine Fläche, eine geradlinige Rille (210), die sich teilweise entlang der Fläche der Module (100) erstreckt sowie eine bogenförmige Rille (202) auf dieser Fläche aufweist, zu der die geradlinige Rille (210) allgemein senkrecht verläuft,
so daß die geradlinige Rille (210) mit Führungen (350, 352) zusammenwirken kann, die an den Aufnahmestationen herausragen, um das Einsetzen des Moduls (100) an der Aufnahmestation in einer vorgeschriebenen Bahn zu führen, und die bogenförmige Bahn (202) mit einer im Eingriff befindlichen Zunge(300) der Überführungseinrichtung zusammenwirken kann, wenn der Modul (100) durch eine der Stationen über diese Zunge (300) in Drehung versetzt wird.

2. Analysegerät (10) nach Anspruch 1, bei welchem die bogenförmige Rille (202) und die geradlinige Rille (210) durch eine Wand (212) voneinander getrennt sind.

3. Analysegerät (10) nach Anspruch 1 oder 2, welches weiterhin eine lösbare Vorspanneinrichtung zur lösbaren Anlage an die Module (100), wenn diese vollständig in den Rotor (34) eingesetzt sind, aufweist, wobei diese Vorspanneinrichtung eine Feder (360) enthält, deren Federkonstante ein Halten des Moduls (100) in seiner Position bewirkt, außer, wenn die Überführungseinrichtung einen Modul aus dem Rotor (34) herauszieht.

4. Analysegerät (10) nach einem der Ansprüche 1 bis 3, bei welchem die Überführungseinrichtung eine Zunge (300) sowie einen Antrieb, welcher derart aufgebaut ist, daß er die Zunge (300) in einer ersten Richtung hin- und her bewegt und weiterhin Führungen (350, 352) aufweist, die an jeder der Aufnahmestationen nach oben ragen, um einen Modul (100) entlang einer Bahn aufzunehmen, die allgemein auf einem Radius des Rotors (34) liegt.

5. Analysegerät (10) zur chemischen Behandlung von Modulen mit Reaktionsküvetten, wobei das Analysegerät (10) mindestens einen solcher Module (100), einen Rotor (34)zum Halten der Module (100) an den Stationen derart, daß die Module (100) allgemein auf dem Rotorradius ausgerichtet sind, einen Antrieb für den Rotor (34), eine Überführungseinrichtung zum Stoßen eines der Module (100) zu einer der Stationen auf dem Rotor (34) sowie einen Antrieb zum Hin- und Herbewegen der Überführungseinrichtung entlang einer geradlinigen Bahn zu dem Rotor (34) hin und von diesem weg aufweist,
dadurch gekennzeichnet, daß einer der Module (100) und die Überführungseinrichtung eine herausragende Zunge (300) und die anderen Module (100) sowie die Überführungseinrichtung eine bogenförmige Rille (202) aufweisen, wobei die Rille (202) und die Zunge (300) derart zusammenwirkend ausgebildet sind, daß bei der Vorgabe einer relativen Stoß- oder Ziehbewegung zwischen der Zunge (300) und der Rille (202) gegeneinander der Modul (100) relativ zum Rotor (34) gestoßen beziehungsweise gezogen wird, und wenn die Zunge (300) frei innerhalb des Rotors (34) gleiten kann, alle Module (100) ohne Zurückziehen der Zunge (300) oder der Rille (202) aus der Nachbarschaft des Rotors (34) frei gedreht werden können und
das Analysegerät weiterhin eine lösbare Vorspanneinrichtung zur lösbaren Anlage an die Module (100), wenn diese vollständig in den Rotor (34) eingesetzt sind, aufweist, wobei diese Vorspanneinrichtung eine Feder (360) enthält, deren Federkonstante ein Halten des Moduls (100) in seiner Position bewirkt, außer, wenn die Überführungseinrichtung einen Modul aus dem Rotor (34) herauszieht.

## Revendications

1. Analyseur (10) comprenant une source de réactifs et des cuvettes de réaction (C), ledit analyseur (10) comportant un rotor (34) ayant une périphérie et un axe (35) de rotation, un dispositif de commande pour faire tourner ledit rotor (34) autour dudit axe (35), ladite source comprenant un module amovible (100) contenant un conteneur de réactif (B1, B2) et une pile desdites cuvettes (C), des stations de réception situées sur ledit rotor (34) construites pour recevoir et engager lesdits modules (100), une station de chargement et de déchargement (L) destinée à recevoir et à rendre les modules individuels (100) depuis et à un opérateur et des moyens de transfert destinés à transférer un module individuel sur ladite station (L) dans une première direction sur ledit rotor (34) ;
caractérisé en ce que chacun desdits modules (100) comporte une surface, une gorge linéaire (210) situé en partie sur la surface desdits modules (100) et une gorge courbe (52) dans ladite surface sur laquelle ladite gorge linéaire (210) s'étend de façon généralement perpendiculaire,
de façon que ladite gorge linéaire (210) puisse coopérer avec des guides (350, 352) se projetant depuis lesdites stations de réception pour diriger l'insertion dudit modules (100) sur une station de réception le long d'un chemin prescrit et que ladite gorge courbe (202) puisse coopérer avec une langue en prise (300) desdits moyens de transfert lorsqu'un module (100) est forcé à tourner par l'une desdites stations sur ladite langue (300).

2. Analyseur selon la revendication 1, dans lequel ladite gorge courbe (12) et ladite gorge linéaire (210) sont séparées l'une de l'autre par une paroi (212).

3. Analyseur selon la revendication 1 ou 2, comportant en outre des moyens de sollicitation pouvant être libérés, destinés à engager lesdits modules (100) d'une manière pouvant être libérée, lorsqu'ils sont entièrement insérés dans ledit rotor (34), les moyens de sollicitation comportant un ressort (360) ayant une constante effective pour maintenir un module (100) en position, sauf lorsque lesdits moyens de transfert extraient un module dudit rotor (34).

4. Analyseur selon l'une quelconque des revendications 1 à 3, dans lequel lesdits moyens de transfert comprennent une langue (300) et comportant en outre un dispositif de commande construit de manière à animer ladite langue (300) d'un mouvement alternatif dans ladite première direction et les guides (350, 352) se projetant vers le haut depuis chacune desdites stations de réception pour recevoir un module (100) le long d'un chemin s'étendant de façon générale sur un rayon dudit rotor (34).

5. Analyseur (10) destiné à traiter des modules de cuvettes de réaction, ledit analyseur (10) comportant au moins l'un desdits module (100), un rotor (34) destiné à maintenir lesdits modules (100) sur des stations de façon que lesdits modules (100) soient généralement alignés avec un rayon du rotor, un dispositif de commande pour ledit rotor (34), des moyens de transfert pour pousser l'un des modules (100) sur l'une desdites stations dudit rotor (34) et un dispositif de commande destiné à animer lesdits moyens de transfert d'un mouvement alternatif vers et en s'éloignant dudit rotor (34) le long d'un chemin linéaire ;
caractérisé en ce que l'un desdits modules (100) et desdits moyens de transfert comporte une langue en projection (300) et l'autre desdits modules (100) et desdits moyens de transfert comporte une gorge courbe (202), ladite gorge (202) et ladite langue (300) étant conformées de manière coopérative de façon que lorsqu'un mouvement relatif de poussée ou de tirage est fourni entre ladite langue (300) et ladite gorge (202), l'une contre l'autre, le module (100) soit poussé ou tiré, respectivement, par rapport audit rotor (34) et lorsque ladite langue (300) coulisse librement à l'intérieur dudit rotor (34), l'ensemble desdits modules (100) puisse être tourné sans extraire ladite langue (300) ou gorge (202) du voisinage dudit rotor (34) ;
comportant en outre des moyens de sollicitation pouvant être libérés, destinés à engager lesdits modules (100) d'une manière pouvant être libérée, lorsqu'ils sont entièrement insérés dans ledit rotor (34), les moyens de sollicitation comportant un ressort (360) ayant une constante effective pour maintenir un module (100) en position, sauf lorsque lesdits moyens de transfert extraient un module dudit rotor (34).
